# EUROPÄISCHE PATENTSCHRIFT

(11) **EP 3 947 990 B1**
(45) Veröffentlichungstag und Bekanntmachung des Hinweises auf die Patenterteilung: **08.03.2023**
(21) Anmeldenummer: 20707221.6
(22) Anmeldetag: 21.02.2020
(51) Int. Cl.: F16C 11/06

(54) **VERFAHREN ZUM HERSTELLEN EINES KUGELGELENKS UND/ODER EINES FAHRWERKBAUTEILS SOWIE EIN SOLCHES FAHRWERKBAUTEIL**
METHOD FOR PRODUCING A BALL JOINT AND/OR A CHASSIS COMPONENT, AND CHASSIS COMPONENT OF THIS TYPE
PROCÉDÉ DE FABRICATION D'UNE ARTICULATION SPHÉRIQUE ET/OU D'UN COMPOSANT DE TRAIN DE ROULEMENT AINSI QU'UN TEL COMPOSANT DE TRAIN DE ROULEMENT

(30) Priorität: 29.03.2019 DE 102019204470
(43) Veröffentlichungstag der Anmeldung: 09.02.2022
(73) Patentinhaber: ZF Friedrichshafen AG, 88046 Friedrichshafen (DE)
(72) Erfinder: LETTMANN, Pascal, 32351 Stemwede (DE); GROENNIGER, Bernhard, 49716 Meppen (DE); LAMLA, Dirk, 49565 Bramsche (DE)
(74) Vertreter: ZF Friedrichshafen AG
(86) Internationale Anmeldenummer: PCT/EP2020/054574
(87) Internationale Veröffentlichungsnummer: WO 2020/200580

(56) Entgegenhaltungen:
- WO-A1-2016/053472
- DE-A1-102016 217 534
- US-A1- 2002 096 799

## Beschreibung

Die Erfindung betrifft ein Verfahren zum Herstellen eines Kugelgelenks und/oder eines Fahrwerkbauteils, bei dem eine Gelenkkugel hergestellt wird, bei dem die Gelenkkugel in ein Spritzgusswerkzeug eingelegt wird, bei dem die Gelenkkugel teilweise mit einem Kunststoffmaterial umgossen wird, und bei dem das Kunststoffmaterial zum Ausbilden eines spritzgegossenen Gelenkgehäuses für die Gelenkkugel ausgehärtet wird.

Ein derartiges Verfahren ist aus der DE 10 2016 217 534 A1 bekannt. Hiernach wird ein Kugelzapfengelenk hergestellt, in dem zunächst in eine Gelenkkugel mit einem Sackloch ein Gelenkzapfen eingepresst wird. Der somit hergestellte Kugelzapfen wird anschließend in ein Spritzgusswerkzeug eingelegt und mit einem Kunststoffmaterial zum Ausbilden eines Gelenkgehäuses umspritzt. Hierbei wird als ein wesentlicher Aspekt herausgestellt, dass die Ausbildung des Sacklochs den Vorteil bietet, dass die Gelenkkugel auf ihrer der Öffnung des Sacklochs abgewandten Seite unterbrechungsfrei sphärisch ausgebildet sein kann. Hierdurch wird eine Polfläche an der von dem Gelenkzapfen abgewandten Seite der Gelenkkugel vermieden, wodurch ein Umspritzen einer solchen Polfläche und damit ein unerwünschtes Blockieren der Gelenkbeweglichkeit verhindert ist.

Nachteilig ist jedoch, dass bei einem derart hergestellten Kugelzapfengelenk eine Versorgung mit einem Schmiermittel und/oder eine Befettung des Gelenks problematisch ist. Zudem verursacht die Verwendung eines komplett vorgefertigten Kugelzapfens beim Spritzgussgießen hohe Werkzeugkosten. Der Gelenkzapfen kann jedoch hinsichtlich unterschiedlicher Parameter verschieden ausgebildet sein. Zu diesen Parametern des Gelenkzapfens gehören beispielsweise ein Nenndurchmesser, eine Zapfenlänge, eine Gewindelänge, eine Gewindegröße, eine Gewindeform, eine Zapfenform, ein Zapfeneingriff und/oder ein Bunddurchmesser. Unterschiede in diesen Parametern führen zu einer hohen Anzahl an Varianten von Gelenkzapfen. Diese Unterschiede müssen bei der Auslegung des Spritzgusswerkzeuges berücksichtigt werden. Dies führt zu einem erheblichen Aufwand und unerwünscht hohen Kosten.

Es ist die der Erfindung zu Grunde liegende Aufgabe, ein Verfahren und/oder ein Fahrwerkbauteil der eingangs genannten Art derart weiterzuentwickeln, dass die Herstellung des Kugelgelenks verbessert ist. Vorzugsweise soll der Kostenaufwand für das Spritzgusswerkzeug reduzierbar und/oder die Verteilung eines Schmiermittels verbessert sein. Insbesondere soll eine alternative Ausführungsform bereitgestellt werden.

Die der Erfindung zu Grunde liegende Aufgabe wird mit einem Verfahren nach Anspruch 1 gelöst. Bevorzugte Weiterbildungen der Erfindung finden sich in den Unteransprüchen und in der nachfolgenden Beschreibung.

Das Verfahren ist zum Herstellen eines Kugelgelenks und/oder eines Fahrwerkbauteils ausgebildet. Insbesondere ist das Kugelgelenk und/oder das Fahrwerkbauteil zur Verwendung in einem Fahrwerk eines Kraftfahrzeugs ausgelegt bzw. ausgebildet. Gemäß dem Verfahren wird zunächst eine Gelenkkugel hergestellt und/oder bereitgestellt. Die Herstellung der Gelenkkugel kann separat und/oder eigenständig in Bezug zum Herstellen des Kugelgelenks und/oder des Fahrwerkbauteils erfolgen. Somit kann die Gelenkkugel als ein vorgefertigtes Bauteil bereitgestellt werden. Gemäß dem Verfahren wird die Gelenkkugel in ein Spritzgusswerkzeug eingelegt. Anschließend wird die Gelenkkugel teilweise mit einem Kunststoffmaterial umgossen und/oder umspritzt. Hiernach härtet das Kunststoffmaterial zum Ausbilden eines spritzgegossenen Gelenkgehäuses für die Gelenkkugel aus. Hierbei wird zum Ausbilden des Gelenkgehäuses eine Gelenkkugel ohne einen Gelenkzapfen verwendet, wobei die Gelenkkugel auf zwei voneinander abgewandten Seiten jeweils eine Polfläche aufweist.

Hierbei ist von Vorteil, dass auf das Umspritzen eines vollständigen Kugelzapfens verzichtet werden kann. Anstelle eines vollständigen Kugelzapfens mit Gelenkkugel und Gelenkzapfen wird lediglich die Gelenkkugel in das Spritzgusswerkzeug eingelegt und mit dem Kunststoffmaterial zum Ausbilden des Gelenkgehäuses teilweise umgossen. Hierdurch kann ein Spritzgusswerkzeug eingesetzt werden, das eine geringere Komplexität aufweisen kann. Insbesondere müssen nicht unterschiedliche Spritzgusswerkzeuge für unterschiedliche Gelenkzapfen vorgehalten werden. Hierdurch können die Kosten für das Spritzgusswerkzeug reduziert werden. Zudem können Spritzgusswerkzeuge eingesetzt werden, die geringere Ausmaße aufweisen. Alternativ kann der gewonnene Raum für Spritzgusswerkzeuge mit einer höheren Kavitätenzahl genutzt werden. Zudem kann auf eine separate Herstellung des vollständigen Kugelzapfens verzichtet werden. Hierdurch können die Herstellungskosten weiter reduziert werden. Insbesondere ergibt sich ein geringerer Logistikaufwand. Besonders vorteilhaft ist, dass die Variantenentstehung im Vergleich mit dem Stand der Technik bezüglich der Herstellung des Kugelgelenks und/oder des Fahrwerkbauteils zeitlich weiter nach hinten gelegt wird.

Das Kugelgelenk kann eine Mittellängsachse aufweisen. Insbesondere ist die Gelenkkugel, der Gelenkzapfen, das Gelenkgehäuse, das Kugelgelenk und/oder das Fahrwerkbauteil rotationssymmetrisch zu der Mittellängsachse ausgebildet. Vorzugsweise befinden sich die beiden Polflächen in Richtung der Mittellängsachse an voneinander abgewandten Seiten der Gelenkkugel. Insbesondere kann eine erste Polfläche zapfenseitig an der Gelenkkugel angeordnet sein. Eine von der ersten Polfläche abgewandte zweite Polfläche kann stirnseitig an der Gelenkkugel angeordnet sein.

Gemäß einer Weiterbildung liegt beim Spritzgießen ein Teil des Spritzgusswerkzeugs an den Polflächen an. Hierdurch kann ein Kontakt des Kunststoffmaterials mit den Polflächen und damit eine Blockierung der Gelenkbeweglichkeit der Gelenkkugel in dem Gelenkgehäuse verhindert werden. Somit kann aufgrund einer geeigneten Auslegung des Spritzgusswerkzeugs auf die Verwendung einer Gelenkkugel verzichtet werden, die auf der von dem Gelenkzapfen abgewandten Seite unterbrechungsfrei sphärisch ausgebildet ist. Stattdessen kann eine Gelenkkugel verwendet werden, die eine ringartige Gestalt aufweist. Insbesondere ist eine Außenseite und/oder Mantelfläche der Gelenkkugel kugelsegmentartig ausgebildet.

Nach einer weiteren Ausführungsform wird eine Gelenkkugel verwendet, die ein Sackloch oder eine Durchgangsöffnung aufweist. Insbesondere erstreckt sich das Sackloch oder die Durchgangsöffnung in Richtung der Mittellängsachse des Kugelgelenks. Mittels des Sacklochs oder der Durchgangsöffnung kann eine einfache Montage und/oder ein Festsetzen eines Gelenkzapfens an der Gelenkkugel ermöglicht sein. Insbesondere weist das Sackloch oder die Durchgangsöffnung eine zylindrische bzw. hohlzylindrische Ausbildung auf. Alternativ kann das Sackloch oder die Durchgangsöffnung konisch oder trichterförmig ausgebildet sein.

Insbesondere wird nach dem Herstellen des Gelenkgehäuses ein Gelenkzapfen in das Sackloch oder in die Durchgangsöffnung eingepresst und/oder eingeklebt. Aufgrund der Montage, das Anordnen und/oder das Festsetzen des Gelenkzapfens an der Gelenkkugel ist der Kugelzapfen des Kugelgelenks gebildet. Hierbei erfolgt die Ausbildung des Kugelzapfens erst nachdem das Gelenkgehäuse durch teilweises Umspritzen der Gelenkkugel gebildet ist. Vorzugsweise wird das Gelenkgehäuse mit der Gelenkkugel vor dem Anordnen des Gelenkzapfens an der Gelenkkugel aus dem Spritzgusswerkzeug entnommen. Hiernach kann das Gelenkgehäuse mit der Gelenkkugel und der Gelenkzapfen in einer, insbesondere separaten, Montageeinrichtung zum Verbinden des Gelenkzapfens mit der Gelenkkugel angeordnet werden.

Vorzugsweise wird das Gelenkgehäuse mit einer ersten Gehäuseöffnung im Bereich einer ersten Polfläche der Gelenkkugel und mit einer zweiten Gehäuseöffnung im Bereich einer zweiten Polfläche der Gelenkkugel ausgebildet. Insbesondere sind die beiden Gehäuseöffnungen rotationssymmetrisch zu der Mittellängsachse des Kugelgelenks ausgebildet.

Der Gelenkzapfen kann im Bereich der ersten Gehäuseöffnung in das Sackloch oder in die Durchgangsöffnung gefügt und/oder eingepresst werden. Hierbei kann die Gelenkkugel im Bereich der zweiten Gehäuseöffnung mittels eines Gegenhalters während des Fügens und/oder Einpressens des Gelenkzapfens abgestützt werden. Insbesondere stützt sich der Gegenhalter auf der zweiten Polfläche der Gelenkkugel ab. Mittels des Gegenhalters werden die beim Fügen und/oder Einpressen des Gelenkzapfens auf die Gelenkkugel wirkenden Kräfte abgefangen. Hierdurch kann eine unerwünschte Belastung oder Überlastung des Gelenkgehäuses und/oder Fahrwerkbauteils verhindert werden.

Nach einer weiteren Ausführungsform wird eine der beiden Gehäuseöffnungen, insbesondere die von dem Gelenkzapfen abgewandte zweite Gehäuseöffnung, mittels eines Abdeckelementes verschlossen. Vorzugsweise erfolgt das Verschließen der Gehäuseöffnung mit dem Abdeckelement, nachdem der Gelenkzapfen an der Gelenkkugel angeordnet worden ist. Das Abdeckelement kann als ein Deckel ausgebildet sein. Zum Befestigen des Abdeckelementes an dem Gelenkgehäuse kann das Abdeckelement in die Gehäuseöffnung und/oder in eine Ringnut der Gehäuseöffnung eingepresst werden. Vorzugsweise wird in den Bereich der zweiten Gehäuseöffnung und/oder zwischen dem Abdeckelement und der dem Abdeckelement zugewandten Polfläche der Gelenkkugel, insbesondere unmittelbar vor dem Verschließen der zweiten Gehäuseöffnung, ein Schmiermittel eingebracht. Bei dem Schmiermittel kann es sich beispielsweise um ein Schmierfett handeln. Hierdurch ist die Schmiermittelversorgung oder die Befettung des Kugelgelenks verbessert.

Von besonderem Vorteil ist ein Fahrwerkbauteil mit einem gemäß dem erfindungsgemäßen Verfahren hergestellten Kugelgelenk. Das Fahrwerkbauteil kann einen Grundkörper aufweisen. Insbesondere bestimmt der Grundkörper die Gestalt und/oder Struktur des Fahrwerkbauteils. Vorzugsweise sind der Grundkörper und das Gelenkgehäuse des Kugelgelenks einstückig ausgebildet. Somit kann der Grundkörper des Fahrwerkbauteils zusammen mit dem Gelenkgehäuse in einem einzigen Spritzgussschritt hergestellt werden. Das Fahrwerkbauteil kann als ein Lenker, eine Koppelstange, eine Pendelstütze, eine Spurstange, ein Traggelenk oder ein Achsträger ausgebildet sein. Der aus der Gelenkkugel und dem Gelenkzapfen gebildete Kugelzapfen ist bewegbar und/oder gelenkig in dem Gelenkgehäuse gelagert. Insbesondere ist unter einer bewegbaren und/oder gelenkigen Lagerung des Kugelzapfens in dem Gelenkgehäuse eine Schwenkbeweglichkeit, Kippbeweglichkeit und/oder Drehbeweglichkeit zu verstehen.

Insbesondere handelt es sich bei dem gemäß dem erfindungsgemäßen Verfahren hergestellten Kugelgelenk und/oder Fahrwerkbauteil um ein zuvor beschriebenes Kugelgelenk und/oder Fahrwerkbauteil. Vorzugsweise ist das Verfahren gemäß allen im Zusammenhang mit dem hier beschriebenen Kugelgelenk und/oder Fahrwerkbauteil erläuterten Ausgestaltungen weitergebildet. Ferner kann das hier beschriebene Kugelgelenk und/oder Fahrwerkbauteil gemäß allen im Zusammenhang mit dem Verfahren erläuterten Ausgestaltungen weitergebildet sein.

Nachfolgend wird die Erfindung anhand der Figuren näher erläutert. Hierbei beziehen sich gleiche Bezugszeichen auf gleiche, ähnliche oder funktional gleiche Bauteile oder Elemente. Es zeigen:
- Fig. 1: eine geschnittene Seitenansicht einer Gelenkkugel in einem Gelenkgehäuse vor einem Schritt eines erfindungsgemäßen Verfahrens zum Herstellen eines Kugelgelenks,
- Fig. 2: eine zweite geschnittene Seitenansicht der Gelenkkugel in dem Gelenkgehäuse vor einem weiteren Schritt des erfindungsgemäßen Verfahrens zum Herstellen des Kugelgelenks, und
- Fig. 3: eine weitere geschnittene Seitenansicht des durch das erfindungsgemäßes Verfahren hergestellten Kugelgelenks bzw. Fahrwerkbauteils.

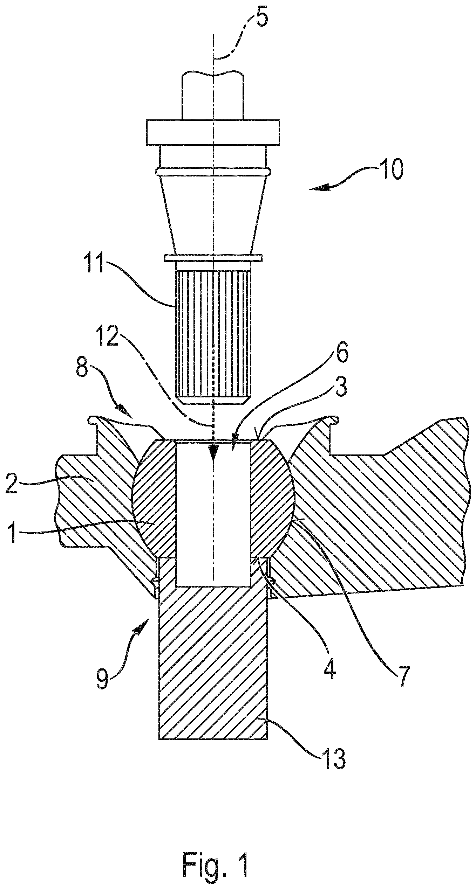

Figur 1 zeigt eine geschnittene Seitenansicht einer Gelenkkugel 1 in einem Gelenkgehäuse 2 vor einem Schritt eines erfindungsgemäßen Verfahrens zum Herstellen eines Kugelgelenks. Gemäß dem erfindungsgemäßen Verfahren wurde zunächst die Gelenkkugel 1 hergestellt. Die Gelenkkugel 1 weist auf zwei voneinander abgewandten Seiten jeweils eine Polfläche 3 bzw. 4 auf. Hierbei ist die erste Polfläche 3 zapfenseitig und die zweite Polfläche 4 stirnseitig angeordnet. Die Gelenkkugel 1 ist rotationssymmetrisch zu einer Mittellängsachse 5 ausgebildet.

Des Weiteren weist die Gelenkkugel 1 bei diesem Ausführungsbeispiel eine Durchgangsöffnung 6 auf. Die Durchgangsöffnung erstreckt sich von der ersten Polfläche 3 bis zu der zweiten Polfläche 4. Hierbei ist die Durchgangsöffnung 6 ebenfalls rotationssymmetrisch zu der Mittelängsachse 5 ausgebildet. Somit ist die Gelenkkugel 1 bei diesem Ausführungsbeispiel im Wesentlichen als ein Ringkörper ausgebildet, der eine kugelabschnittsförmige Außenseite 7 aufweist.

Gemäß dem erfindungsgemäßen Verfahren wird ausschließlich die Gelenkkugel 1 in ein hier nicht näher dargestelltes Spritzgusswerkzeug eingelegt. Hierbei werden Teile des Spritzgusswerkzeugs an die Polflächen 3, 4 angelegt. Anschließend wird die Gelenkkugel 1 teilweise mit einem Kunststoffmaterial umgossen bzw. umspritzt. Hierbei verhindern die an den Polflächen 3, 4 anliegenden Teile des Spritzgusswerkzeugs einen Kontakt des Kunststoffmaterials mit den Polflächen 3, 4 und damit eine Blockierung der vorgesehenen Gelenkbeweglichkeit der Gelenkkugel 1. Anschließend wird das Kunststoffmaterial ausgehärtet, wodurch sich das Gelenkgehäuse 2 bildet.

Das Gelenkgehäuse 2 ist mit einer ersten Gehäuseöffnung 8 und mit einer zweiten Gehäuseöffnung 9 ausgebildet. Die erste Gehäuseöffnung 8 ist im Bereich der ersten Polfläche 3 angeordnet. Die zweite Gehäuseöffnung 9 befindet sich im Bereich der zweiten Polfläche 4.

Anschließend an das Ausbilden des Gelenkgehäuses 2 wird gemäß der hier gezeigten Darstellung ein Gelenkzapfen 10 in die Durchgangsöffnung 6 eingepresst. Hierzu weist der Gelenkzapfen 10 einen Verbindungsabschnitt 11 auf. Der Verbindungsabschnitt 11 ist korrespondierend zu der Durchgangsöffnung 6 ausgebildet. Der Gelenkzapfen 10 wird mit dem Verbindungsabschnitt 11 voran entsprechend dem Pfeil 12 in Richtung der Mittellängsachse 5 in die Durchgangsöffnung 6 der Gelenkkugel 1 eingepresst. Bei diesem Ausführungsbeispiel weist der Verbindungsabschnitt 11 an seiner Außenseite eine Rändelung auf, wodurch die Pressverbindung mit der Durchgangsöffnung 6 bzw. der Gelenkkugel 1 verbessert ist.

Der Gelenkzapfen 10 wird im Bereich der ersten Gehäuseöffnung 8 in die Durchgangsöffnung 6 eingepresst. Während des Einpressens des Gelenkzapfens 10 wird die Gelenkkugel 1 im Bereich der zweiten Gehäuseöffnung 9 mittels eines Gegenhalters 13 abgestützt. Hierbei ist der Gegenhalter 13 derart ausgebildet, so dass dieser an der zweiten Polfläche 4 der Gelenkkugel 1 anliegt. Der Gegenhalter 13 nimmt die beim Einpressen des Gelenkzapfens 10 auf die Gelenkkugel 1 wirkenden Kräfte auf.

Hierdurch wird eine unerwünschte Belastung des Gelenkgehäuses 2 beim Einpressen vermieden.

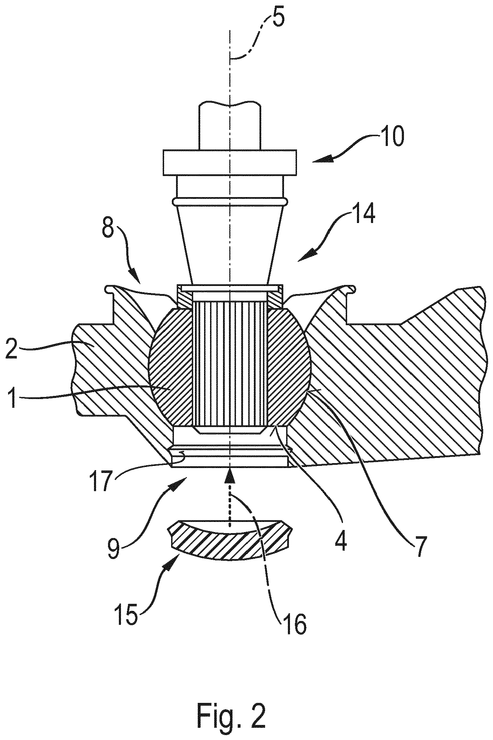

Figur 2 zeigt eine zweite geschnittene Seitenansicht der Gelenkkugel 1 in dem Gelenkgehäuse 2 vor einem weiteren Schritt des erfindungsgemäßen Verfahrens zum Herstellen des Kugelgelenks. Der Gelenkzapfen 10 und die Gelenkkugel 1 bilden einen Kugelzapfen 14. Der Kugelzapfen 14 ist gelenkbeweglich in dem Gelenkgehäuse 2 gelagert. Hierbei erstreckt sich der Gelenkzapfen 10 aus der ersten Gehäuseöffnung 8 nach außen hinaus. Nach dem Herstellen des Kugelzapfens 14 wird die zweite Gehäuseöffnung 9 mittels eines Abdeckelementes 15 verschlossen. Bei diesem Ausführungsbeispiel ist das Abdeckelement 15 als ein Deckel realisiert. Zum Verschließen der zweiten Gehäuseöffnung 9 wird das Abdeckelement 15 gemäß dem Pfeil 16 in Richtung der zweiten Polfläche 4 in die zweite Gehäuseöffnung 9 eingesetzt.

Bei diesem Ausführungsbeispiel weist die zweite Gehäuseöffnung 9 eine die Mittellängsachse 5 rotationssymmetrisch umlaufende Ringnut 17 auf. Das Abdeckelement 15 wird in die Ringnut 17 eingepresst bzw. eingerastet. Unmittelbar vor dem Einsetzen des Abdeckelementes 15 wird ein hier nicht näher dargestelltes Schmiermittel in die zweite Gehäuseöffnung 9 eingebracht. Hierdurch ist eine hinreichende Schmiermittelversorgung oder Befettung der Gelenkkugel 1 gewährleistet.

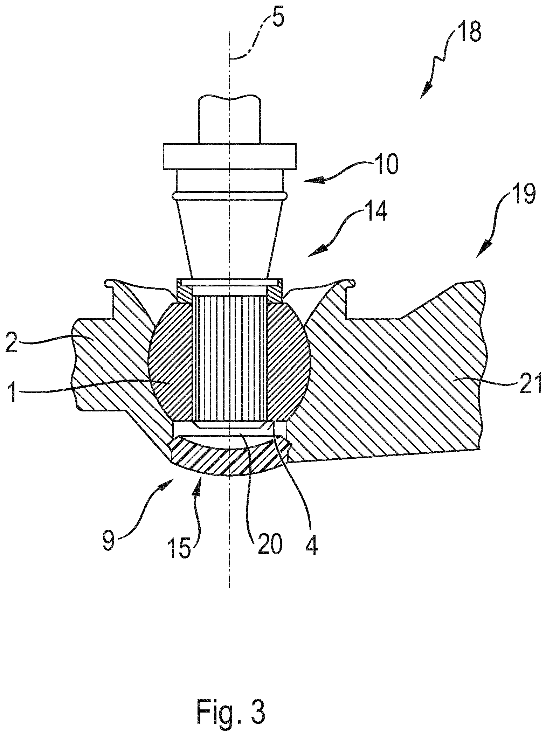

Figur 3 zeigt eine weitere geschnittene Seitenansicht des hergestellten Kugelgelenks 18 bzw. Fahrwerkbauteils 19. Das Abdeckelement 15 ist derart ausgebildet und/oder in der zweiten Gehäuseöffnung 9 angeordnet, dass ein Freiraum 20 zwischen dem Abdeckelement 15 und der zweiten Polfläche 4 verbleibt. Der Freiraum 20 dient als ein Reservoir für das hier nicht näher dargestellte Schmiermittel.

Das Kugelgelenk 18 ist als ein Kugelzapfengelenk ausgebildet. Des Weiteren ist bei diesem Ausführungsbeispiel das Kugelgelenk 18 als ein Bestandteil des Fahrwerkbauteils 19 realisiert. Das Fahrwerkbauteil 19 kann beispielsweise als ein Lenker für ein Fahrwerk eines Kraftfahrzeugs vorgesehen sein. Das Fahrwerkbauteil 19 hat einen Grundkörper 21. Bei diesem Ausführungsbeispiel sind der Grundkörper 21 des Fahrwerkbauteils 19 und das Gelenkgehäuse 2 des Kugelgelenks 18 einstückig ausgebildet. Mit anderen Worten wird beim Spritzgussgießen des Gelenkgehäuses 2 zugleich der Grundkörper 21 bzw. das Fahrwerkbauteil 19 gebildet.

### Bezugszeichen

- 1: Gelenkkugel
- 2: Gelenkgehäuse
- 3: Polfläche
- 4: Polfläche
- 5: Mittellängsachse
- 6: Durchgangsöffnung
- 7: Außenseite
- 8: erste Gehäuseöffnung
- 9: zweite Gehäuseöffnung
- 10: Gelenkzapfen
- 11: Verbindungsabschnitt
- 12: Pfeil
- 13: Gegenhalter
- 14: Kugelzapfen
- 15: Abdeckelement
- 16: Pfeil
- 17: Ringnut
- 18: Kugelgelenk
- 19: Fahrwerkbauteil
- 20: Freiraum
- 21: Grundkörper

## Patentansprüche

1. Verfahren zum Herstellen eines Kugelgelenks (18) und/oder eines Fahrwerkbauteils (19), bei dem eine Gelenkkugel (1) hergestellt wird, bei dem die Gelenkkugel (1) in ein Spritzgusswerkzeug eingelegt wird, bei dem die Gelenkkugel (1) teilweise mit einem Kunststoffmaterial umgossen wird, und bei dem das Kunststoffmaterial zum Ausbilden eines spritzgegossenen Gelenkgehäuses (2) für die Gelenkkugel (1) ausgehärtet wird, **dadurch gekennzeichnet, dass** zum Ausbilden des Gelenkgehäuses (2) die Gelenkkugel (1) ohne einen Gelenkzapfen (10) verwendet wird, wobei die Gelenkkugel (1) auf zwei voneinander abgewandten Seiten jeweils eine Polfläche (3, 4) aufweist.

2. Verfahren nach Anspruch 1, **dadurch gekennzeichnet, dass** das Kugelgelenk (18) eine Mittellängsachse (5) aufweist und sich die beiden Polflächen (3, 4) in Richtung der Mittellängsachse (5) an voneinander abgewandten Seiten der Gelenkkugel (1) befinden.

3. Verfahren nach Anspruch 1 oder 2, **dadurch gekennzeichnet, dass** beim Spritzgussgießen ein Teil des Spritzgusswerkzeugs an den Polflächen (3, 4) anliegt, wodurch ein Kontakt des Kunststoffmaterials mit den Polflächen (3, 4) und damit eine Blockierung der Gelenkbeweglichkeit verhindert wird.

4. Verfahren nach einem der vorhergehenden Ansprüche, **dadurch gekennzeichnet, dass** eine Gelenkkugel (1) verwendet wird, die ein Sackloch oder eine Durchgangsöffnung (6) aufweist, insbesondere erstreckt sich das Sackloch oder die Durchgangsöffnung (6) in Richtung einer Mittellängsachse (5) des Kugelgelenks (18).

5. Verfahren nach Anspruch 4, **dadurch gekennzeichnet, dass** nach dem Herstellen des Gelenkgehäuses (2) ein Gelenkzapfen (10) in das Sackloch oder in die Durchgangsöffnung (6) gefügt, eingepresst und/oder eingeklebt wird.

6. Verfahren nach einem der vorhergehenden Ansprüche, **dadurch gekennzeichnet, dass** das Gelenkgehäuse (2) mit einer ersten Gehäuseöffnung (8) im Bereich einer ersten Polfläche (3) und mit einer zweiten Gehäuseöffnung (9) im Bereich einer zweiten Polfläche (4) ausgebildet wird.

7. Verfahren nach Anspruch 5 und 6, **dadurch gekennzeichnet, dass** der Gelenkzapfen (10) im Bereich der ersten Gehäuseöffnung (8) in das Sackloch oder in die Durchgangsöffnung (6) eingepresst wird, wobei die Gelenkkugel (1) im Bereich der zweiten Gehäuseöffnung (9) mittels eines Gegenhalters (13) während des Einpressens des Gelenkzapfens (10) abgestützt wird.

8. Verfahren nach einem der Ansprüche 6 oder 7, **dadurch gekennzeichnet, dass** eine der beiden Gehäuseöffnungen (8, 9), insbesondere die von dem Gelenkzapfen (10) abgewandte zweite Gehäuseöffnung (9), mittels eines Abdeckelementes (15) verschlossen wird, vorzugsweise wird in den Bereich der zweiten Gehäuseöffnung (9) und/oder zwischen dem Abdeckelement (15) und der dem Abdeckelement (15) zugewandten Polfläche (4) der Gelenkkugel (1) ein Schmiermittel eingebracht.

## Claims

1. Method for producing a ball joint (18) and/or a chassis component (19), in the case of which method a joint ball (1) is produced, in the case of which method the joint ball (1) is inserted into an injection moulding die, in the case of which method the joint ball (1) is overmoulded partially with a plastic material, and in the case of which method the plastic material is cured in order to configure an injection-moulded joint housing (2) for the joint ball (1), **characterized in that**, in order to configure the joint housing (2), the joint ball (1) is used without a joint pin (10), the joint ball (1) having in each case one pole face (3, 4) on two sides which face away from one another.

2. Method according to Claim 1, **characterized in that** the ball joint (18) has a centre longitudinal axis (5), and the two pole faces (3, 4) are situated on the sides of the joint ball (1) which face apart from one another in the direction of the centre longitudinal axis (5).

3. Method according to Claim 1 or 2, **characterized in that**, during the injection moulding, a part of the injection moulding die bears against the pole faces (3, 4), as a result of which a contact of the plastic material with the pole faces (3, 4) and therefore blocking of the joint mobility are prevented.

4. Method according to one of the preceding claims, **characterized in that** a joint ball (1) is used which has a blind bore or a through opening (6); and, in particular, the blind bore or the through opening (6) extends in the direction of a centre longitudinal axis (5) of the ball joint (18).

5. Method according to Claim 4, **characterized in that**, after the production of the joint housing (2), a joint pin (10) is joined, pressed and/or adhesively bonded into the blind bore or into the through opening (6).

6. Method according to one of the preceding claims, **characterized in that** the joint housing (2) is configured with a first housing opening (8) in the region of a first pole face (3) and with a second housing opening (9) in the region of a second pole face (4).

7. Method according to Claims 5 and 6, **characterized in that** the joint pin (10) is pressed into the blind bore into the through opening (6) in the region of the first housing opening (8), the joint ball (1) being supported in the region of the second housing opening (9) by means of a counterholder (13) during pressing in of the joint pin (10).

8. Method according to either of Claims 6 or 7, **characterized in that** one of the two housing openings (8, 9), in particular the second housing opening (9) which faces away from the joint pin (10), is closed by means of a covering element (15); and a lubricant is preferably introduced into the region of the second housing opening (9) and/or between the covering element (15) and that pole face (4) of the joint ball (1) which faces the covering element (15).

## Revendications

1. Procédé de fabrication d'une articulation sphérique (18) et/ou d'un composant de train de roulement (19), dans lequel une articulation sphérique (1) est fabriquée, dans lequel l'articulation sphérique (1) est placée dans un outil de moulage par injection, dans lequel l'articulation sphérique (1) est partiellement enrobée d'une matière plastique, et dans lequel la matière plastique est durcie pour former un boîtier d'articulation (2) moulé par injection pour l'articulation sphérique (1), **caractérisé en ce que**, pour former le boîtier d'articulation (2), l'articulation sphérique (1) est utilisée sans un pivot d'articulation (10), l'articulation sphérique (1) présentant sur deux côtés détournés l'un de l'autre respectivement une surface polaire (3, 4).

2. Procédé selon la revendication 1, **caractérisé en ce que** l'articulation sphérique (18) présente un axe longitudinal médian (5) et les deux surfaces polaires (3, 4) se trouvent dans la direction de l'axe longitudinal médian (5) sur des côtés de l'articulation sphérique (1) détournés l'un de l'autre.

3. Procédé selon la revendication 1 ou 2, **caractérisé en ce que**, lors du moulage par injection, une partie de l'outil de moulage par injection s'applique contre les surfaces polaires (3, 4), ce qui empêche un contact de la matière plastique avec les surfaces polaires (3, 4) et donc un blocage de la mobilité de l'articulation.

4. Procédé selon l'une quelconque des revendications précédentes, **caractérisé en ce qu'**une articulation sphérique (1) présentant un trou borgne ou une ouverture de passage (6) est utilisée, le trou borgne ou l'ouverture de passage (6) s'étend notamment en direction d'un axe longitudinal médian (5) de l'articulation sphérique (18).

5. Procédé selon la revendication 4, **caractérisé en ce qu'**après la fabrication du boîtier d'articulation (2), un pivot d'articulation (10) est assemblé, enfoncé et/ou collé dans le trou borgne ou dans l'ouverture de passage (6) .

6. Procédé selon l'une quelconque des revendications précédentes, **caractérisé en ce que** le boîtier d'articulation (2) est formé avec une première ouverture de boîtier (8) dans la zone d'une première surface polaire (3) et avec une deuxième ouverture de boîtier (9) dans la zone d'une deuxième surface polaire (4).

7. Procédé selon les revendications 5 et 6, **caractérisé en ce que** le pivot d'articulation (10) est enfoncé dans la zone de la première ouverture de boîtier (8) dans le trou borgne ou dans l'ouverture de passage (6), l'articulation sphérique (1) étant supporté dans la zone de la deuxième ouverture de boîtier (9) au moyen d'un contre-appui (13) pendant l'enfoncement du pivot d'articulation (10).

8. Procédé selon l'une quelconque des revendications 6 ou 7, **caractérisé en ce que** l'une des deux ouvertures de boîtier (8, 9), notamment la deuxième ouverture de boîtier (9) détournée du pivot d'articulation (10), est fermée au moyen d'un élément de recouvrement (15), un lubrifiant est de préférence introduit dans la zone de la deuxième ouverture de boîtier (9) et/ou entre l'élément de recouvrement (15) et la surface polaire (4) de l'articulation sphérique (1) tournée vers l'élément de recouvrement (15).
